# FASCICULE DE BREVET EUROPEEN

(11) **EP 3 194 199 B1**
(45) Date de publication et mention de la délivrance du brevet: **28.11.2018**
(21) Numéro de dépôt: 15739638.3
(22) Date de dépôt: 23.07.2015
(51) Int. Cl.: B60L 11/18, B63G 8/08, H01M 10/48

(54) **ENGIN SOUS-MARIN MUNI DE LIGNES DE MOYENS DE STOCKAGE D'ÉNERGIE**
MIT REIHEN AN ENERGIESPEICHERMITTELN AUSGESTATTETES U-BOOT
SUBMARINE PROVIDED WITH ROWS OF POWER STORAGE MEANS

(30) Priorité: 15.09.2014 FR 1402045
(43) Date de publication de la demande: 26.07.2017
(73) Titulaire: NAVAL GROUP, 75015 Paris (FR)
(72) Inventeur: PIERRE, Nicolas, F-29000 Quimper (FR)
(74) Mandataire: Lavoix
(86) Numéro de dépôt international: PCT/EP2015/066945
(87) Numéro de publication internationale: WO 2016/041668

(56) Documents cités:
- EP-A2- 1 641 066

## Description

La présente invention concerne un engin sous-marin tel qu'un sous-marin proprement dit.

Ce type d'engins sous-marin est muni de moyens électriques de propulsion alimentés à partir d'un réseau de distribution électrique généralement découpé en bords.

Ce type d'engins sous-marin embarque également une grande quantité de sources de stockage d'énergie électrique à tension continue.

On pourra trouver un exemple de réalisation de tels moyens dans le document EP1641066.

En raison de leur faible masse, les batteries Lithium-ion permettent d'envisager de fabriquer des batteries de très grandes capacités.

Dans le but de gagner de la densité d'implantation et de profiter pleinement des avantages technologiques procurés par ces batteries Lithium-ion, les modules de batteries doivent être empilés les uns à côté des autres ou les uns sur les autres au maximum, ce qui peut poser des problèmes d'accès soit aux batteries proprement dites, soit aux cartes électroniques de gestion de leur fonctionnement, situées au plus près des modules de batteries de façon à limiter le nombre de fils et donc les risques d'apparition d'un court-circuit.

Les cartes électroniques étant en effet susceptibles de tomber en panne plus régulièrement que les modules de batteries en tant que tels, composés uniquement d'accumulateurs et de connectiques, il est intéressant de pouvoir accéder à ces cartes aisément pour les changer rapidement sans démonter plusieurs modules.

Le but de l'invention est donc de résoudre ces problèmes.

A cet effet l'invention a pour objet un engin sous-marin muni de moyens de stockage d'énergie électrique à base de batteries Lithium-ion, se présentant sous la forme d'éléments de stockage individuels associés, chaque élément étant muni d'une carte électronique de raccordement et de gestion de son fonctionnement, dans lequel :
- les éléments de stockage individuel associés sont agencés en ligne,
- chaque carte électronique d'un élément d'une ligne est reliée mécaniquement et électriquement à ses extrémités, aux cartes électroniques de la ligne qui sont ses plus proches voisines, pour former une bande de cartes pour cette ligne,
- cette bande de cartes est manipulable par un opérateur à partir d'au moins l'une de ses extrémités et est apte à être montée coulissante par rapport aux éléments de stockage de la ligne.

Selon d'autres caractéristiques prises seules ou en combinaison, l'engin sous-marin selon l'invention peut également présenter l'une ou plusieurs des caractéristiques suivantes :
- les cartes électroniques et les éléments de stockage d'une ligne comportent des moyens complémentaires de raccordement électrique décalés les uns par rapport aux autres dans le sens de la largeur de ces cartes électroniques et éléments ;
- la position des moyens complémentaires de raccordement est configurable selon la position de l'élément dans la ligne ;
- une bande de cartes d'une ligne est montée déplaçable à coulissement dans des rails prévus de chaque côté des éléments de stockage.

L'invention sera mieux comprise à l'aide de la description qui va suivre donnée uniquement à titre d'exemple et faite en se référant aux dessins annexés sur lesquels :
- les figures 1 et 2 représentent une ligne de batteries Lithium-ion comportant des éléments de stockage et des cartes électroniques selon l'invention,
- la figure 3 représente une vue de dessus des éléments de stockage de la figure 1, et
- la figure 4 représente une vue de dessous des cartes électroniques de la figure 1,

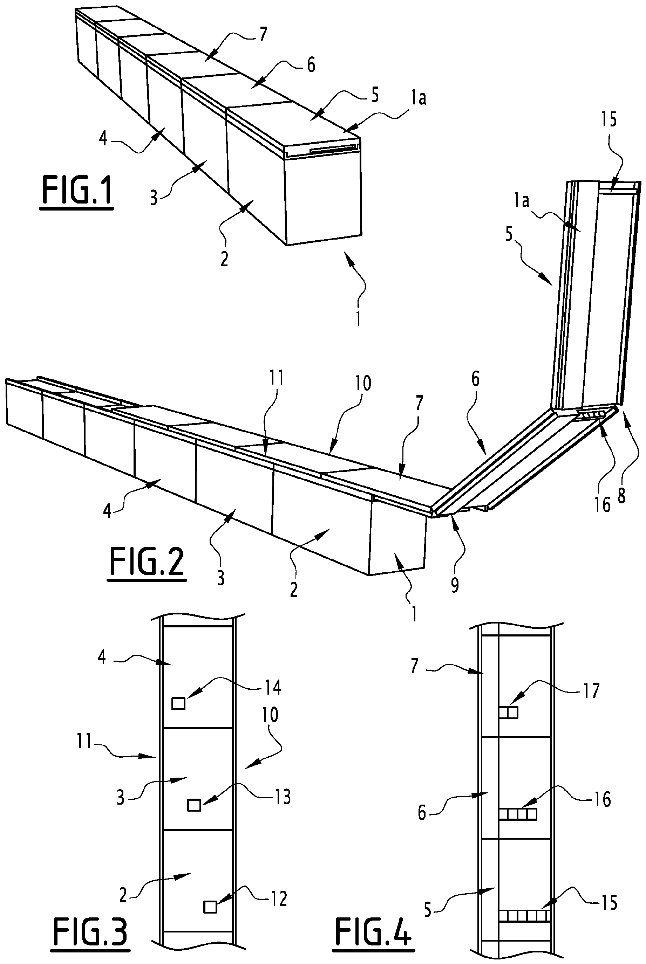

On a en effet illustré sur ces figures et en particulier sur les figures 1 et 2, des moyens de stockage d'énergie électrique à base de batteries Lithium-ion, propres à entrer dans la constitution d'un engin sous-marin selon l'invention.

Cet engin sous-marin est par exemple formé par un sous-marin proprement dit.

Ces moyens de stockage d'énergie électrique se présentent sous la forme d'éléments de stockage individuels munis chacun d'une carte électronique de raccordement et de gestion de son fonctionnement.

Ainsi par exemple sur ces figures 1 et 2, on a illustré une ligne 1 d'éléments 2, 3, 4 de stockage individuels d'énergie électrique, munis chacun respectivement d'une carte électronique 5, 6, 7 de raccordement et de gestion de son fonctionnement.

Ces cartes sont par exemple disposées sur la face supérieure des éléments 2, 3, 4 de stockage.

De façon classique ces cartes électroniques 5, 6, 7 permettent d'assurer le raccordement des éléments 2, 3, 4 de stockage au reste des circuits de l'engin sous-marin et de gérer le fonctionnement de ces éléments de stockage 2, 3, 4.

Ces cartes électroniques 5, 6, 7 comportent alors des circuits électroniques de raccordement tels que par exemple des plots de raccordement destinés à coopérer avec des plots complémentaires des éléments 2, 3, 4 de stockage individuels.

Pour résoudre les différents problèmes mentionnés précédemment, afin d'empiler au maximum les modules de batteries, tout en permettant un accès aisé à ces modules et aux cartes correspondantes, dans l'engin selon l'invention, les éléments 2, 3, 4 de stockage individuels sont agencés en ligne.

De plus chaque carte électronique 5, 6, 7 d'un élément 2, 3, 4 d'une ligne est relié mécaniquement et électriquement à ses voisines pour former, comme illustré sur ces figures 1 et 2, une bande de cartes pour cette ligne 1.

Cette bande de cartes est alors manipulable par un opérateur à partir d'au moins l'une de ses extrémités par coulissement par rapport aux éléments 2, 3, 4 de stockage de la ligne.

Ainsi, comme visible sur la figure 2, les éléments 2, 3, 4 de stockage sont disposés sur la ligne 1, les cartes électroniques 5, 6, 7 correspondantes étant reliées les unes aux autres au niveau de leurs extrémités 8 et 9 par exemple, de manière à former une bande de cartes 1a pour cette ligne 1.

Cette bande de cartes 1a est alors montée coulissante sur l'ensemble des éléments 2, 3, 4 de stockage de la ligne 1 grâce par exemple à des rails latéraux, tels que par exemple les rails 10, 11 prévus de chaque côté des éléments 2, 3, 4 de stockage.

Une fois ces éléments alignés, les rails de ces éléments sont alors également alignés les uns par rapport aux autres, pour recevoir les bords correspondants de la bande de cartes 1a.

On conçoit alors que lorsqu'un opérateur souhaite avoir accès aux cartes électroniques d'une ligne, il lui suffit de saisir l'une des extrémités de la bande de cartes 1a correspondant à la ligne et de tirer sur cette bande de cartes afin de la dégager des éléments de stockage associés à la ligne.

Avantageusement, les éléments de stockage et les cartes électroniques associées comprennent des moyens ou organes complémentaires de raccordement pour échanger des informations.

Ces organes complémentaires sont par exemple des connecteurs pour les éléments de stockage et des organes de raccordement pour les cartes électroniques.

Ainsi, chaque élément de stockage comporte un connecteur propre à récupérer et à transmettre des informations concernant l'élément de stockage auquel il est associé, notamment des informations sur le potentiel aux bornes de l'élément de stockage.

Trois connecteurs 12, 13, 14 correspondant respectivement aux éléments 2, 3, 4 de stockage sont par exemple illustrés sur la figure 3.

La carte correspondant à un élément de stockage comprend alors un organe de raccordement raccordable au connecteur de l'élément de stockage associé.

Par exemple et comme cela est visible sur la figure 4, les cartes électroniques 5, 6, 7 associées aux éléments 2, 3, 4 de stockage comprennent des organes 15, 16, 17 de raccordement électrique, ces organes 15, 16, 17 étant raccordables respectivement aux connecteurs 12, 13, 14 des éléments 2, 3, 4 de stockage tels qu'illustrés sur la figure 3.

Comme illustré sur ces figures 3 et 4, les connecteurs 12, 13, 14 sont décalés les uns par rapport aux autres dans le sens de la largeur des éléments de stockage 2, 3, 4.

Les organes 15, 16, 17 de raccordement sont également décalés les uns par rapport aux autres dans le sens de la largeur des cartes, de sorte que ces organes 15, 16, 17 soient toujours raccordables respectivement aux connecteurs 12, 13, 14.

Cette configuration permet alors aux cartes électroniques 5, 6, 7 d'être aptes à glisser sur les éléments de stockage 2, 3, 4 sans risquer de buter sur les connecteurs 12, 13, 14 lorsqu'un opérateur fait coulisser la bande de cartes 1a de la ligne 1 par exemple.

Bien entendu cette disposition des moyens complémentaires de raccordement est réglable et configurable selon la position de l'élément de stockage correspondant dans la ligne.

On conçoit ainsi qu'une telle structure présente un certain nombre d'avantages notamment au niveau de la manipulation et de l'entretien de ces batteries.

## Revendications

1. Engin sous-marin muni de moyens de stockage d'énergie électrique à base de batteries Lithium-ion, se présentant sous la forme d'éléments (2, 3, 4) de stockage individuels associés, chaque élément (2, 3, 4) étant muni d'une carte électronique (5, 6, 7) de raccordement et de gestion de son fonctionnement, dans lequel :
- les éléments (2, 3, 4) de stockage individuel associés sont agencés en ligne,
- chaque carte électronique (5, 6, 7) d'un élément d'une ligne (1) est reliée mécaniquement et électriquement à ses extrémités (8, 9) aux cartes électroniques (5, 6, 7) de la ligne (1) qui sont ses plus proches voisines, pour former une bande de cartes (1a) pour cette ligne (1),
- cette bande de cartes (1a) est manipulable par un opérateur à partir d'au moins l'une de ses extrémités et est apte à être montée coulissante par rapport aux éléments (2, 3, 4) de stockage de la ligne (1).

2. Engin sous-marin selon la revendication 1, **caractérisé en ce que** les cartes électroniques (5, 6, 7) et les éléments (2, 3, 4) de stockage d'une ligne (1) comportent des moyens complémentaires (12, 13, 14, 15, 16, 17) de raccordement électrique décalés les uns par rapport aux autres dans le sens de la largeur de ces cartes électroniques (5, 6, 7) et éléments (2, 3, 4).

3. Engin sous-marin selon la revendication 2, **caractérisé en ce que** la position des moyens complémentaires de raccordement (12, 13, 14, 15, 16, 17) est configurable selon la position de l'élément (2, 3, 4) dans la ligne (1).

4. Engin sous-marin selon l'une quelconque des revendications précédentes, **caractérisé en ce qu'**une bande de cartes (1a) d'une ligne est montée déplaçable à coulissement dans des rails (10, 11) prévus de chaque côté des éléments (2, 3, 4) de stockage.

## Patentansprüche

1. Unterwassergerät, das mit Mitteln zur Speicherung von elektrischer Energie auf Basis von Lithiumionen-Batterien ausgestattet ist, die in der Form von verbundenen individuellen Speicher-Elementen (2, 3, 4) sind, wobei jedes Element (2, 3, 4) mit einer elektronischen Karte (5, 6, 7) zur Verbindung und zur Steuerung seiner Funktion ausgestattet ist, wobei:
- die verbundenen individuellen Speicher-Elemente (2, 3, 4) in Linie angeordnet sind,
- jede elektronische Karte (5, 6, 7) eines Elements einer Linie (1) an seinen Enden (8, 9) mechanisch und elektrisch mit den elektronischen Karten (5, 6, 7) der Linie (1) verbunden ist, die ihre nächsten Nachbarn sind, zum Bilden eines Bands von Karten (1a) für diese Linie (1),
- dieses Band von Karten (1a) von wenigstens einem seiner Enden aus durch einen Bediener betätigbar ist und imstande ist, bezüglich der Speicher-Elemente (2, 3, 4) der Linie (1) verschiebbar montiert zu sein.

2. Unterwassergerät gemäß Anspruch 1, **dadurch gekennzeichnet, dass** die elektronischen Karten (5, 6, 7) und die Speicher-Elemente (2, 3, 4) einer Linie (1) aufweisen komplementäre Mittel (12, 13, 14, 15, 16, 17) zur elektrischen Verbindung, die zueinander im Abstand sind in Richtung der Breite dieser elektronischen Karten (5, 6, 7) und Elemente (2, 3, 4).

3. Unterwassergerät gemäß Anspruch 2, **dadurch gekennzeichnet, dass** die Position der komplementären Verbindungs-Mittel (12, 13, 14, 15, 16, 17) gemäß der Position des Elements (2, 3, 4) in der Linie (1) konfigurierbar ist.

4. Unterwassergerät gemäß irgendeinem der vorhergehenden Ansprüche, **dadurch gekennzeichnet, dass** ein Band von Karten (1a) einer Linie in Schienen (10, 11) verschiebeverlagerbar montiert ist, die beidseitig der Speicherelemente (2, 3, 4) bereitgestellt sind.

## Claims

1. A submarine provided with lithium-ion battery-based electricity storage means, assuming the form of associated individual storage elements (2, 3, 4), each element (2, 3, 4) being provided with an electronic connecting and operation management card (5, 6, 7), in which:
- the associated individual storage elements (2, 3, 4) are arranged in a row,
- each electronic card (5, 6, 7) of an element of a row (1) is mechanically and electrically connected, at its ends (8, 9), to the electronic cards (5, 6, 7) of the row (1) that are its closest neighbors, to form a strip of cards (1a) for this row (1),
- this strip of cards (1a) can be manipulated by an operator from at least one of its ends and is able to slide relative to the storage elements (2, 3, 4) of the row (1).

2. The submarine according to claim 1, **characterized in that** the electronic cards (5, 6, 7) and the storage elements (2, 3, 4) of a row (1) include complimentary electrical connecting means (12, 13, 14, 15, 16, 17) offset from one another in the direction of the width of these electronic cards (5, 6, 7) and elements (2, 3, 4).

3. The submarine according to claim 2, **characterized in that** the position of the complementary connecting means (12, 13, 14, 15, 16, 17) is configurable depending on the position of the element (2, 3, 4) in the row (1).

4. The submarine according to any one of the preceding claims, **characterized in that** a strip of cards (1a) of a row is mounted to be movable by sliding in rails (10, 11) provided on each side of the storage elements (2, 3, 4).
